# EUROPEAN PATENT SPECIFICATION

(11) **EP 1 579 145 B1**
(45) Date of publication and mention of the grant of the patent: **03.06.2009**
(21) Application number: 03809193.0
(22) Date of filing: 19.12.2003
(51) Int. Cl.: F16L 55/04, F16L 55/027, B01D 3/06

(54) **METHOD FOR REDUCING VIBRATIONS IN A CONDUIT**
VERFAHREN ZUR VERRINGERUNG VON SCHWINGUNGEN IN EINER LEITUNG
PROCEDE DE REDUCTION DE VIBRATIONS DANS UN CONDUIT

(30) Priority: 20.12.2002 US 434955 P
(43) Date of publication of application: 28.09.2005
(73) Proprietor: SHELL INTERNATIONALE RESEARCH MAATSCHAPPIJ B.V., 2596 HR Den Haag (NL)
(72) Inventor: HUFFMASTER, Michael Arthur, Houston, TX 77042 (US); SANBORN, Richard Addison, Houston, TX 12418 (US); STEIN, Louis Edward, Houston, TX 77092 (US); WICKS III, Moye, Houston, TX 77096 (US)
(86) International application number: PCT/EP2003/051075
(87) International publication number: WO 2004/057229

(56) References cited:
- EP-A- 0 382 313
- EP-A- 0 410 522
- CH-A- 203 906
- US-A- 3 033 306
- US-A- 4 623 493
- US-A- 5 307 830

## Description

### FIELD OF THE INVENTION

The invention relates to a method for reducing vibrations in a conduit by means of a vibration-reducing insert.

The invention further relates to a gas treating plant with a conduit comprising a vibration-reducing insert.

A vibration-reducing insert and a gas treating plant of the known art are described in documents US 3,033,306 and EP-A-0 410 522.

### BACKGROUND OF THE INVENTION

Vibrations, especially large, sudden and/or irregular vibrations, in conduits through which a gas-liquid mixture flows can cause significant problems, leading to lost production, unplanned maintenance and potential environmental and safety hazards.

In particular, vibrations in vertical feed supply conduits in gas treating plants or in horizontal pipelines for transporting liquified natural gas (LNG) containing a gas-liquid mixture are a serious problem. These vibrations, typically arising due to an unstable flow regime in the gas-liquid mixture in the vertical feed supply conduit or in the horizontal pipeline, can cause damage to line supports and fatigue in piping joints. It is therefore desirable to have a method to suppress or remove vibrations in a conduit, especially in a vertical feed supply conduit or in a horizontal conduit, especially if such a conduit is in a gas treating plant or in an LNG plant or is part of a pipeline for the transportation of LNG.

Methods for suppressing or reducing vibrations in a conduit are known in the art. These methods include the use of lining materials having vibration-dampening characteristics or the use of external or internal means to reduce or suppress vibrations. In US 4,045,057, a vibration barrier/structural connector adapted to be interposed in a conduit to prevent transmission of vibrations along the conduit is described. The vibration barrier device described in US 4,045,057 has vibration damping bodies composed of material having vibration damping characteristics comparable to those of asbestos-filled rubber.

A disadvantage of the vibration barrier device described in US 4,045,057 is that the use of vibration-dampening materials is expensive and cumbersome. In addition, a reduction of the available space through which a fluid can flow may occur.

We have now found a relatively simple and inexpensive method to reduce vibrations in a conduit, especially in a vertical feed supply conduit, through which a gas-liquid mixture flows. The method according to the invention does not substantially reduce the available flow space.

### SUMMARY OF THE INVENTION

According to claim 1, a method for reducing vibrations in a conduit, it being a vertical feed supply conduit, through which a gas-liquid mixture flows, the conduit having a certain wetted surface area, in which method the wetted surface area of at least part of the conduit is enlarged at least 2 times, preferably at least 6 times, more preferably at least 12 times by providing the conduit over at least part of its length with an insert.

### DETAILED DESCRIPTION OF THE INVENTION

Reference herein to vibrations is to vibrations which can cause damage to the conduit, and/or to the conduit supports and/or to piping joints. Especially large, sudden and/or irregular vibrations are intended, especially in horizontal or vertical directions.

The phrase "reducing" as used herein refers to suppressing, either partly or to a large extent, or removing altogether.

Reference herein to the wetted surface area of the vertical feed supply conduit is to the surface area inside the conduit that is in contact with the gas-liquid mixture flowing through the conduit. In the absence of a vibration-reducing device, the wetted surface area equals the surface area of the inner walls of the conduit and is therefore the surface area of a cylinder with the length and internal diameter of the conduit. In the method according to the invention, the wetted surface area of at least part of the conduit is enlarged by providing the conduit over at least part of its length with a vibration-reducing insert. The enlargement of the wetted surface area of at least part of the conduit is at least 2 times, preferably at least 6 times, more preferably at least 12 times. Reference herein to the enlargement of the wetted surface area is to the difference in wetted surface area of the conduit comprising a vibration-reducing device relative to the wetted surface area of the conduit without the insert.

The method according to the invention is applied in vertical feed supply conduits, suitably wherein the flow rates of the gas-liquid mixture are up to 25 m/s, preferably between 0.2 and 7 metres per second, more preferably between 0.5 and 5 m/s, most preferably between 1 and 3 m/s. At the preferred flow rates, the level of vibrations in the conduit, especially in a vertical feed supply conduit, are generally higher than what is considered as an acceptable level.

The suitable length of the vibration-reducing insert used depends inter alia on the level of vibrations, the length and internal diameter of the conduit, the flow rate of the gas-liquid mixture and on the type of insert used. Preferably, in the method according to the invention the vibration-reducing insert extends over at least one fifth of the length of the conduit, more preferably over at least one fourth of the length of the conduit. At most, the insert extends over the whole length of the conduit.

The amount of gas in the gas-liquid mixtures influences the occurrence of vibrations and the level of the vibrations in the conduit, especially in a vertical feed supply conduit. Typically, in gas-liquid mixtures wherein the gas fraction is between 0.1 and 15 wt%, the level of vibrations is beyond an acceptable level. The gas fraction is expressed as the weigth percentage of gas in the gas-liquid mixture. Preferably, the method according to the invention is used in gas-liquid mixtures with gas fractions between 0.5 and 10 wt%, more preferably between 1 and 5 wt%, because the level of vibrations is higher in these mixtures.

According to the invention, the vibration-reducing insert is positioned at the downstream end of a vertical feed supply conduit. The level of vibrations is typically higher at the downstream end at the top of the vertical feed supply conduit than at the upstream end at the bottom of the conduit. Reference herein to the term downstream is to the part of the conduit towards which the gas-liquid mixture flows. The method according to the invention is applied in a vertical feed supply conduit in a gas treating plant, the gas treating plant comprising a regenerator. In a gas treating plant, vibrations can occur especially in a vertical feed supply conduit, comprising a gas-liquid mixture, which debouches into an inlet of the regenerator. The method according to the invention can reduce the vibrations in this vertical feed supply conduit.

A suitable vibration-reducing insert is an elongated device which can be placed and immobilized inside the conduit and which device increases the wetted surface area of the conduit by providing additional inner wall surface area without substantially reducing the area available for flow. Preferably the free flow area is reduced by less than 15%, more preferably less than 10%, more preferably less than 5%. Reference herein to the area available for flow is to the area within the conduit through which the gas-liquid mixture can freely flow.

Vibration-reducing inserts suitable for the method according to the invention can comprise an assembly of plates or rectangular structures or square structures or honeycomb structures or an assembly of elongated open-ended tubes aligned along the same axis. In a vertical conduit, the tubes or rectangular or square structures are aligned along a vertical axis. In a horizontal conduit, the tubes or rectangular or square structures would be aligned along a horizontal axis. An insert comprising an assembly of elongated open-ended tubes aligned along the vertical axis is preferred. It is believed that due to the interstitial spaces between the open-ended tubes, a lower increase in wetted perimeter is sufficient since independent channels are established. The diameter of these tubes may be the same or different. Preferably, the diameter of the tubes is the same. Another preferred insert is an insert comprising an assembly of elongated open-ended rectangular or square structures, since these rectangular or square structures are easier to pack. The rectangular or square structures in the assembly may all have the same width proportions or may be of different width proportions.

In order to enlarge the wetted surface area of at least part of the conduit at least 2 times, preferably at least 6 times, the ratio of the diameter of the conduit to the diameter of the open-ended tubes is suitably between 20:1 and 4:1, preferably between 18:1 and 8:1, more preferably between 16:1 and 10:1. The length of the tubes may be the same or different. Preferably, the length of the tubes is the same. Suitably, the ratio of the length of the tubes to the length of the conduit is at least 1:5, preferably at least 1:4.

The method according to the invention is applied in a conduit through which a gas-liquid system flows in gas treating plants. The method is also suitable to apply in those conduits of an LNG plant through which a gas-liquid system flows. In a typical LNG plant, a system comprising natural gas is led to a pre-cooling unit prior to being liquified. The term "natural gas" is applied to gas produced from underground accumulations of widely varying composition. Apart from hydrocarbons, natural gas generally includes nitrogen, carbon dioxide and sometimes a small proportion of hydrogen sulphide. The principal hydrocarbon is methane, the lightest and lowest boiling member of the paraffin series of hydrocarbons. Other constituents are ethane, propane, butane, pentane, hexane, heptane, etc. Especially in the pre-cooling section of an LNG plant, gas-liquid systems can be present, since part of the natural gas will be liquified but part will be still in the gaseous phase. Typically, in the pre-cooling unit of an LNG plant, the system comprising natural gas is cooled to temperatures of between 10 °C to -70 °C, preferably between -30 °C to -50 °C.

The invention is further related to a gas treating plant with a vertical feed supply conduit comprising a vibration-reducing insert.

According to the invention, the vertical feed supply conduit debouches into the feed inlet of a gas-liquid contact column. The gas-liquid contact column comprises a gas outlet, a liquid outlet and a feed inlet.

The gas outlet is located at the upper end of the column, the liquid outlet is located at the bottom end of the column and the vertical feed supply conduit extends upwardly to the feed inlet.

Typically, vibration levels are higher at the downstream end of the vertical feed supply conduit, which is located towards the feed inlet. It is therefore foreseen that the insert is placed at the downstream end in the upper part of the vertical feed supply conduit, that is to say towards or close to the position where the vertical feed-supply conduit debouches into the feed inlet of the gas-liquid column.

Typically, the internal diameter of the vertical feed supply conduit is between 2" (5.08 cm) and 50" (127 cm), or between 4" (10.16 cm) and 40"(101.6 cm), or between 5" (12.7 cm) and 35" (88.9 cm).

The length of the vertical feed supply conduit is typically between 5 and 40 m, preferably between 10 and 30 m.

Examples of a gas-liquid contact column include a distillation column or a regenerator tower used in a gas treating process.

In a typical gas treating process, a gas stream comprising for instance acidic gaseous compounds or other gaseous compounds is sent to an absorber tower. In the absorber tower, the gas stream is contacted with a liquid to absorb the acidic compounds or other gaseous compounds. The liquid can be an aqueous amine solution, optionally comprising a physical solvent. The physical solvent is preferably sulfolane.

The absorber preferably comprises internals such as trays or a packing, e.g. a random or structured packing. The pressure in the absorber tower is relatively high with typical operating pressures of between 20 and 120 bara, preferably between 40 and 80 bara. The temperature in the absorber tower is relatively low, typically between 30 and 90 °C, preferably between 40 and 80 °C. The absorber tower has a gas outlet at the top through which cleaned gas, i.e. the gas from which the acidic or other gaseous compounds have been absorbed, leaves the tower.

The gas-liquid mixture in the absorber tower comprising the absorbed gaseous acidic compounds or other gaseous compounds is referred to as fat solvent. This fat solvent is removed from the absorber tower at the lower end of the absorber tower. Typically, the fat solvent is sent to a flash vessel. The flash vessel has a lower operating pressure than the absorber tower, typically between 2.5 and 15 bara, preferably between 4 to 10 bara.

The fat solvent leaving the flash vessel is then led through a substantially horizontal conduit, via a heat exchanger to an absorber level control valve. From this valve, a horizontal conduit comprising the fat solvent is connected to a vertical feed supply conduit.

The vertical feed supply conduit debouches into the feed inlet of a regenerator tower. In the regenerator tower, the acidic and other gaseous compounds from the fat solvent are removed and the solvent is regenerated. The regenerator tower has a gas outlet, a liquid outlet and a feed inlet. The gas outlet is located at the top of the regenerator tower and vents off the gas. The liquid outlet is located at the bottom of the regenerator tower. From the liquid outlet, regenerated solvent is led via a conduit to the absorber tower. The regenerator tower preferably comprises internals such as trays or a packing, e.g. a random or structured packing. The pressure in the regenerator tower is relatively low with typical operating pressures of between 2 and 4 bara. The temperature in the regenerator tower is relatively high, typically between 100 and 140 °C.

In the vertical feed supply conduit, an unstable flow regime with formation of gas locks from the fat solvent can occur. The valve reduces, but does not fully prevent, the formation of these gas locks.

Typically, the flow rates of the fat solvent in the vertical feed supply conduit are kept below 25 m/s, suitably between 0.2 and 7 metres per second, preferably between 0.5 and 5 m/s, more preferably between 1 and 3 m/s.

Due to the unstable flow regime, the vertical feed supply conduit vibrates. The extent of vibration of the vertical feed supply conduit is such, that damage to conduit supports and fatigue in piping joints can occur.

Typically, the vibrations occur in fat solvents with a gas content of up to 10 % gas, suitably between about 1 and 9% gas, preferably between 2 and 8% gas, calculated as weight of the gas relative to the weight of the fat solvent. In fat solvents with a gas content of between 1% and 5%, preferably between 1.5 and 2.5%, the vibrations are usually more severe.

A possible solution to the problem of vibration of a vertical conduit, especially a vertical feed supply conduit, would be to have the absorber level control valve at the upper end of the vertical conduit, especially in the case of a vertical feed supply conduit (see the above-mentioned EP-A-0 410 522). A disadvantage of this solution is that putting the valve up at higher elevations is cumbersome with respect to maintenance and with respect to construction and support, especially in view of the length of the vertical feed supply conduit and the weight of the valve. Typically, the length of this vertical feed conduit is between 5 and 40 m, preferably between 10 and 30 m.

Another possible solution to the problem of vibration of the vertical feed supply conduit would be to put a restriction orifice at the regenerator inlet. This has been tried in vertical feed supply conduit where unacceptable vibrations were experienced. A serious disadvantage of this solution is that although the vibrations in the vertical feed supply conduit were reduced, a high velocity stream developed just up front of the regenerator inlet. This high velocity stream caused serious damage to the inlet device. The method of using a vibration-reducing insert according to the present invention offers a solution to the vibration problem without damaging the inlet.

### EXAMPLE 1 (comparative)

In a vertical feed supply conduit in a gas treating plant as described above with an unacceptable level of vibrations, a restriction orifice was placed at the regenerator inlet. Although the vibrations in the vertical feed supply conduit came down to acceptable levels, a high velocity stream developed just up front of the regenerator inlet. This high velocity stream caused serious damage to the inlet device.

### EXAMPLE 2 (according to the invention)

In the vertical feed supply conduit described in example 1, a vibration reducing device was placed and immobilized. The vibration-reducing device comprised an assembly of elongated open-ended tubes. The ratio of the tubes to the ratio of the conduit was 8:1. The wetted surface area was enlarged 7.5 times. Vibrations of the conduit came down to the same acceptable levels as in the comparative example, but no damage was caused to the inlet device.

## Claims

1. A method for reducing vibrations in a conduit through which a gas-liquid mixture flows, the conduit having a wetted surface area, in which method the wetted surface area of at least part of the conduit is enlarged at least 2 times, preferably at least 6 times, more preferably at least 12 times, by providing the conduit over at least part of its length with an insert, wherein the conduit is a vertical feed supply conduit which debouches into a regenerator inlet of a gas treating plant, wherein the insert is positioned at the downstream end in the upper part of the conduit and wherein the gas-liquid mixture comprises absorbed gaseous acidic compounds.

2. A method according to claim 1, wherein the insert extends over at least a fifth of the length of the conduit, preferably over at least one fourth of the length of the conduit.

3. A method according to claim 1 or 2, wherein the superficial flow velocity of the gas-liquid mixture is between 0.2 and 7 m/s, preferably between 0.5 and 5 m/s, more preferably between 1 and 3 m/s.

4. A method according to any of claims 1 to 3, wherein the gas fraction is between 0.1 and 15 wt%, preferably between 0,5 and 10 wt%, more preferably between 1 and 5 wt%.

5. A method according to any of claims 1 to 4, wherein the insert is a device comprising an assembly of elongated open-ended tubes.

6. A method according to claim 5, wherein the ratio of the diameter of the conduit to the diameter of the tubes is between 20:1 and 4:1, preferably between 18:1 and 8:1, more preferably between 16:1 and 10:1.

7. A gas treating plant comprising a vertical feed supply conduit and a gas-liquid contact column, wherein the vertical feed supply conduit debouches into the feed inlet of the gas-liquid contact column, the gas-liquid contact column comprising a gas outlet, a liquid outlet and a feed inlet, wherein the vertical feed conduit comprises a vibration reducing insert, by which insert the wetted surface area of at least part of the conduit is enlarged at least 2 times, preferably at least 6 times, more preferably at least 12 times, wherein the gas outlet is at the upper end of the column, the liquid outlet is at the bottom end of the column and the vertical feed supply conduit extends upwardly to the feed inlet, wherein the vibration reducing insert is placed at the downstream, end in the upper part of the vertical feed supply conduit.

8. A gas treating plant according to claim 7, wherein the internal diameter of the conduit is between 2.54 cm (1") and 152.4 cm (60"), preferably between 5.08 cm (2") and 127 cm (50"), more preferably between 10.16 cm (4") and 101.6 cm (40"), most preferably between 12.7 cm (5") and 88.9 cm (35").

9. A gas treating plant according to claim 7 or 8,wherein the length of the conduit is between 5 and 40 m, preferably between 10 and 30 m.

10. A gas treating plant according to any of claims 7 to 9, wherein the vibration reducing internal insert is a device comprising an assembly of elongated open-ended tubes.

11. A gas treating plant according to claim 10, wherein the ratio of the diameter of the conduit to the diameter of the tubes is between 20:1 and 4:1, preferably between 18:1 and 8:1, more preferably between 16:1 and 10:1.

## Patentansprüche

1. Verfahren zum Verringern der Schwingungen in einer Leitung, welche von einem Gas-Flüssigkeits-Gemisch durchströmt ist, wobei die Leitung eine benetzte Oberflächenzone aufweist, in welchem Verfahren die benetzte Oberflächenzone zumindest eines Teiles der Leitung um das Doppelte, vorzugsweise um zumindest das 6-fache, noch bevorzugter um zumindest das 12-fache vergrößert wird, indem die Leitung über zumindest einen Teil ihrer Länge mit einem Einsatz versehen wird, wobei die Leitung eine vertikale Einsatzmaterial-Zuführleitung ist, welche in einen Regeneratoreinlaß einer Gasbehandlungsanlage mündet, wobei der Einsatz am stromabwärtigen Ende in dem oberen Teil der Leitung angeordnet ist, und wobei das Gas-Flüssigkeits-Gemisch absorbierte gasförmige Säureverbindungen enthält.

2. Verfahren nach Anspruch 1, bei welchem sich der Einsatz über zumindest ein Fünftel der Länge der Leitung, vorzugsweise über zumindest ein Viertel der Länge der Leitung erstreckt.

3. Verfahren nach Anspruch 1 oder 2, bei welchem die Oberflächenströmungsgeschwindigkeit des Gas-Flüssigkeits-Gemisches zwischen 0,2 und 7 m/s, vorzugsweise zwischen 0,5 und 5 m/s, noch bevorzugter zwischen 1 und 3 m/s beträgt.

4. Verfahren nach einem der Ansprüche 1 bis 3, bei welchem die Gasfraktion zwischen 0,1 und 15 Gew.-%, vorzugsweise zwischen 0,5 und 10 Gew.-%, noch bevorzugter zwischen 1 und 5 Gew.-% ausmacht.

5. Verfahren nach einem der Ansprüche 1 bis 4, bei welchem der Einsatz eine Vorrichtung ist, die eine Anordnung aus langgestreckten offenendigen Rohren umfaßt.

6. Verfahren nach Anspruch 5, bei welchem das Durchmesserverhältnis der Leitung zum Durchmesser der Rohre zwischen 20:1 und 4:1, vorzugsweise zwischen 18:1 und 8:1, noch bevorzugter zwischen 16:1 und 10:1 beträgt.

7. Gasbehandlungsanlage mit einer vertikalen Einsatzmaterial-Zuführleitung und einer Gas-Flüssigkeits-Kontaktsäule, wobei die vertikale Einsatzmaterial-Zuführleitung in den Einsatzeinlaß der Gas-Flüssigkeits-Kontaktsäule mündet, wobei die Gas-Flüssigkeits-Kontaktsäule einen Gasauslaß, einen Flüssigkeitsauslaß und einen Einsatzeinlaß hat, wobei die vertikale Einsatzmaterialleitung einen schwingungsverringernden Einsatz aufweist, durch welchen Einsatz die benetzte Oberflächenzone zumindest eines Teiles der Leitung um zumindest das Doppelte, vorzugsweise um zumindest das 6-fache, noch bevorzugter um zumindest das 12-fache vergrößert wird, wobei sich der Gasauslaß am oberen Ende der Säule, der Flüssigkeitsauslaß am unteren Ende der Säule befindet, und sich die vertikale Einsatzmaterialzuführleitung nach oben zu dem Einsatzeinlaß erstreckt, wobei der schwingungsverringernde Einsatz am stromabwärtigen Ende am oberen Teil der vertikalen Einsatzmaterial-Zuführleitung angeordnet ist.

8. Gasbehandlungsanlage nach Anspruch 7, bei welcher der Innendurchmesser der Leitung zwischen 2,54 cm (1") und 152,4 cm (60"), vorzugsweise zwischen 5,08 cm (2") und 127 cm (50"), noch bevorzugter zwischen 10,16 cm (4") und 101,6 cm (40") und am bevorzugtesten zwischen 12,7 cm (5") und 88,9 cm (35") beträgt.

9. Gasbehandlungsanlage nach Anspruch 7 oder 8, bei welcher die Länge der Leitung zwischen 5 und 40 m, vorzugsweise zwischen 10 und 30 m beträgt.

10. Gasbehandlungsanlage nach einem der Ansprüche 7 bis 9, bei welcher der schwingungsverringernde innere Einsatz eine Vorrichtung ist, die aus einer Anordnung von langgestreckten offenendigen Rohren besteht.

11. Gasbehandlungsanlage nach Anspruch 10, bei welcher das Verhältnis des Durchmessers der Leitung zum Durchmesser der Rohre zwischen 20:1 und 4:1, vorzugsweise zwischen 18:1 und 8:1, noch bevorzugter zwischen 16:1 und 10:1 beträgt.

## Revendications

1. Procédé de réduction de vibrations dans un conduit à travers lequel un mélange de gaz - liquide s'écoule, le conduit présentant une aire de surface humide, procédé dans lequel l'aire de surface humide d'au moins une partie du conduit est agrandie d'au moins 2 fois, de préférence d'au moins 6 fois, et mieux encore d'au moins 12 fois en équipant le conduit d'un insert sur au moins une partie de sa longueur, dans lequel le conduit est un conduit d'alimentation vertical qui débouche dans une entrée de régénérateur d'une installation de traitement de gaz, dans lequel l'insert est positionné à l'extrémité aval dans la partie supérieure du conduit, et dans lequel le mélange de gaz - liquide comprend des composés acides gazeux absorbés.

2. Procédé selon la revendication 1, dans lequel l'insert s'étend sur au moins un cinquième de la longueur du conduit, de préférence sur au moins un quart de la longueur du conduit.

3. Procédé selon la revendication 1 ou 2, dans lequel la vitesse d'écoulement superficielle du mélange de gaz - liquide est comprise entre 0,2 m/s et 7 m/s, de préférence entre 0,5 m/s et 5 m/s, et mieux encore entre 1 m/s et 3 m/s.

4. Procédé selon l'une quelconque des revendications 1 à 3, dans lequel la fraction de gaz est comprise entre 0,1 % en poids et 15 % en poids, de préférence entre 0,5 % en poids et 10 % en poids, et mieux encore entre 1 % en poids et 5 % en poids.

5. Procédé selon l'une quelconque des revendications 1 à 4, dans lequel l'insert est un dispositif comprenant un ensemble de tubes allongés ouverts aux extrémités.

6. Procédé selon la revendication 5, dans lequel le rapport du diamètre du conduit au diamètre des tubes est compris entre 20:1 et 4:1, de préférence entre 18:1 et 8:1, et mieux encore entre 16:1 et 10:1.

7. Installation de traitement de gaz comprenant un conduit d'alimentation vertical et une colonne de contact de gaz - liquide, dans laquelle le conduit d'alimentation vertical débouche dans l'entrée d'alimentation de la colonne de contact de gaz - liquide, la colonne de contact de gaz - liquide comprenant une sortie de gaz, une sortie de liquide et une entrée d'alimentation, dans laquelle le conduit d'alimentation vertical comprend un insert de réduction de vibrations, insert par l'intermédiaire duquel l'aire de surface humide d'au moins une partie du conduit est agrandie d'au moins 2 fois, de préférence d'au moins 6 fois, et mieux encore d'au moins 12 fois, dans laquelle la sortie de gaz se trouve à l'extrémité supérieure de la colonne, la sortie de liquide se trouve à l'extrémité inférieure de la colonne, et le conduit d'alimentation vertical s'étend vers le haut jusqu'à l'entrée d'alimentation, dans laquelle l'insert de réduction de vibrations est placé à l'extrémité aval dans la partie supérieure du conduit d'alimentation vertical.

8. Installation de traitement de gaz selon la revendication 7, dans laquelle le diamètre intérieur du conduit est compris entre 2,54 cm (1") et 152,4 cm (60"), de préférence entre 5,08 cm (2") et 127 cm (50"), mieux encore entre 10,16 cm (4") et 101,6 cm (40"), et idéalement entre 12,7 cm (5") et 88,9 cm (35").

9. Installation de traitement de gaz selon la revendication 7 ou 8, dans laquelle la longueur du conduit est comprise entre 5 m et 40 m, de préférence entre 10 m et 30 m.

10. Installation de traitement de gaz selon l'une quelconque des revendications 7 à 9, dans laquelle l'insert interne de réduction de vibrations est un dispositif comprenant un ensemble de tubes allongés ouverts aux extrémités.

11. Installation de traitement de gaz selon la revendication 10, dans laquelle le rapport du diamètre du conduit au diamètre des tubes est compris entre 20:1 et 4:1, de préférence entre 18:1 et 8:1, et mieux encore entre 16:1 et 10:1.
